**Europäisches Patentamt**

(19) **European Patent Office**

**Office européen des brevets**

(11) Numéro de publication: **0 034 089**
**B1**

## (12) FASCICULE DE BREVET EUROPEEN

(45) Date de publication du fascicule du brevet:
**09.05.84**

(21) Numéro de dépôt: **81400151.7**

(22) Date de dépôt: **02.02.81**

(51) Int. Cl.³: **B 01 D 3/00**, C 07 C 85/26

(54) **Procédé permettant la séparation, par distillation, d'un mélange de produits contenant un élément risquant de précipiter lors d'une distillation normale dudit mélange.**

(30) Priorité: **08.02.80 FR 8002802**

(43) Date de publication de la demande:
**19.08.81 Bulletin 81/33**

(45) Mention de la délivrance du brevet:
**09.05.84 Bulletin 84/19**

(84) Etats contractants désignés:
**BE CH DE GB IT LI LU NL**

(56) Documents cités:
**CH - A - 246 249**
**FR - A - 2 004 366**
**FR - A - 2 413 347**

(73) Titulaire: **CHIMIE DEVELOPPEMENT INTERNATIONAL SOCIETE A RESPONSABILITE LIMITEE dite:, 42 rue Legendre, F-75017 Paris (FR)**

(72) Inventeur: **Delassus, Jean-Michel, 5 Bd Pablo Picasso, F-94000 Creteil (FR)**

(74) Mandataire: **Combe, André et al, CABINET BEAU DE LOMENIE 55 rue d'Amsterdam, F-75008 Paris (FR)**

## Description

La présente invention concerne un procédé et un appareillage permettant la séparation, par distillation, d'un mélange de produits contenant un élément risquant de précipiter lors d'une distillation normale dudit mélange.

Il arrive dans l'industrie chimique que l'on ait à traiter, en vue de la séparation d'un composé, un mélange de produits qui contient un élément qui précipite lorsque ledit mélange est soumis à une distillation classique. Le cas le plus fréquent est celui de mélanges contenant de l'eau, deux composés «clefs» (c'est-à-dire entre lesquels on veut faire la séparation), éventuellement d'autres composés ne jouant pas un rôle direct dans la séparation entre les composés «clefs» et un sel minéral en solution dans ledit mélange, ce sel minéral devenant insoluble dans le mélange lorsque la concentration de l'un des composés «clefs» dépasse un certain seuil. On conçoit que la distillation classique de tels mélanges soit difficile ou impossible lorsque, à un certain niveau de la colonne de distillation, la concentration de l'un des composés, le moins volatil des deux composés dépasse le seuil au-dessus duquel le sel précipite; en effet, la précipitation dudit sel dans la colonne de distillation colmate les dispositifs internes de ladite colonne et empêche son bon fonctionnement.

Cet inconvénient peut être partiellement évité par un rinçage périodique à l'eau. Un tel rinçage pertube le fonctionnement de l'installation et est même parfois impossible à réaliser.

Cet inconvénient peut également être évité en utilisant des colonnes sans élément interne tel que les évaporateurs à film tombant ou à film raclé. De tels appareils ont de faibles performances de séparation.

Cet inconvénient peut également être limité en utilisant des éléments internes à la colonne très spéciaux. Ces éléments sont très spécifique et de mise en oeuvre difficile.

La présente invention vise un procédé pour réaliser la séparation, par distillation, de mélanges tels que décrits ci-dessus et ce sans risque de colmatage de la colonne de distillation utilisée.

Le procédé selon l'invention consiste à réaliser dans un évaporateur une séparation primaire du mélange de départ en un mélange gazeux comportant la plus grande partie du composé «clef» le puls volatil contenu dans le mélange de départ et une certaine partie du composé «clef» le moins volatil et en une solution contenant les autres éléments du mélange de départ, à injecter ledit mélange gazeux dans la partie haute d'une colonne à distiller et ladite solution dans la partie basse d'une colonne à distiller, lesdites parties haute et basse de la colonne à distiller étant choisies de façon que la séparation des deux composés du mélange de départ impliquant une augmentation notable de la concentration du composé le moins volatil s'effectue pour l'essentiel entre lesdites parties haute et basse de la colonne.

Ce procédé est ainsi conçu de façon que:

— le composé «clef» le plus volatil est récupéré en tête de la colonne à distiller;

— la séparation entre ledit composé «clef» le plus volatil et le composé «clef» le moins volatil est essentiellement effectuée entre les deux points d'injection de la colonne à distiller;

— et l'on recueille à la partie inférieure de la colonne une solution contenant le composé «clef» le moins volatil, l'eau et le sel.

Plus particulièrement le procédé selon l'invention permet de séparer, par distillation, à partir d'un mélange contenant de l'ammoniac, de la diméthylamine, de l'eau et du chlorure de sodium, ledit ammoniac d'avec la diméthylamine sans provoquer la précipitation dudit chlorure de sodium, ce procédé étant caractérisé en ce que

— dans un évaporateur, équivalent à une colonne ayant moins de cinq plateaux théoriques, on provoque l'évaporation de la quasi-totalité de l'ammoniac contenu dans le mélange de départ et d'une partie de la méthylamine contenue dans ledit mélange;

— on alimente une colonne à distiller avec, d'une part, en partie haute de ladite colonne, les vapeurs produites dans l'évaporateur et avec, d'autre part, en partie basse de ladite colonne, le liquide provenant de l'évaporateur;

— et on recueille en tête de ladite colonne l'ammoniac contenu dans le mélange de départ.

Le procédé selon l'invention permet également de séparer, par distillation, à partir d'un mélange contenant de l'ammoniac, de la diméthylamine, de la diméthylhydrazine asymétrique, de l'eau et du chlorure de sodium, d'une part, les composés volatils que sont l'ammoniac et la diméthylamine d'avec les autres constituants du mélange sans provoquer la précipitation dudit chlorure de sodium, ledit procédé étant caractérisé en ce:

— dans un évaporateur, équivalent à une colonne ayant moins de cinq plateaux théoriques, on provoque l'évaporation de la quasi-totalité de l'ammoniac et de la diméthylamine contenue dans le mélange de départ et d'une partie de la diméthylhydrazine asymétrique contenue dans ledit mélange;

— on alimente une colonne à distiller avec, d'une part, en partie haute de ladite colonne, les vapeurs provenant de l'évaporateur et avec, d'autre part, en partie basse de ladite colonne, le liquide provenant de l'évaporateur;

— et on recueille en tête de ladite colonne l'ammoniac et la diméthylamine contenus dans le mélange de départ.

L'appareil utilisé pour la mise en oeuvre du procédé selon l'invention est constitué par l'emploi d'un évaporateur (A) permettant la réalisation de la séparation primaire et d'une colonne à distiller (B) qui est alimentée à sa partie haute et à sa partie basse respectivement par le mélange gazeux et la solution provenant dudit évaporateur (A). L'évaporateur (A) permettant de réaliser la séparation primaire peut être un ballon de flash ou un évaporateur à film ou tout autre appareil de distillation simple.

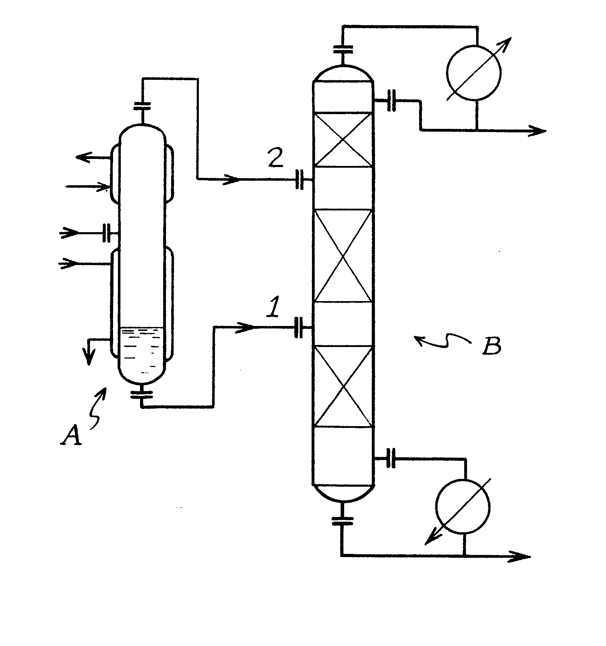

Un appareil de ce type est représenté sur la figure unique. Sur cette figure, on a indiqué:

— en (A) un évaporateur;

— en (B) une colonne à distiller.

L'évaporateur (A) est pourvu d'une tubulure d'amenée du mélange de départ et, éventuellement, d'une chemise permettant le chauffage; il comporte également une tubulure de départ du mélange gazeux et une tubulure de départ d'une solution liquide; en fait (A) peut être tout dispositif de séparation équivalent à une colonne de distillation comportant moins de cinq plateaux théoriques.

La colonne à distiller est banale.

L'assemblage entre ces deux éléments (A) et (B) est caractérisé par le fait que le mélange gazeux sortant de (A) est injecté dans la colonne en un point 2 situé en partie haute de cette colonne et que la solution sortant de (A) est injectée en un point 1 situé en partie basse de cette colonne. Cela implique que c'est entre 1 et 2 que la séparation des deux produits «clefs» volatils s'effectue, c'est-à-dire qu'en fonctionnement normal de la colonne la concentration au point 1 du produit «clef» le moins volatil contenu dans le mélange de départ est nettement inférieure à la concentration critique dudit produit, c'est-à-dire à la concentration dudit produit qui provoquerait, dans la solution, la précipitation du sel.

Bien que chaque mélange de départ puisse conduire à un appareillage particulier pour ce qui concerne les définitions quantitatives des caractéristiques de cet appareillage, il apparaît que le plus souvent:

— l'évaporateur (A) représente un dispositif de séparation dont la performance correspond à une colonne de distillation comportant moins de cinq plateaux théoriques;

— le point d'injection 1 est tel qu'il y ait au plus cinq plateaux théoriques entre le bouilleur de la colonne et ledit point 1;

— le point d'injection 2 est tel qu'il y ait au moins un plateau théorique entre lui et la tête de la colonne.

Les exemples ci-après illustrent l'invention.

### Exemple 1

On veut séparer un mélange contenant, pour 1 kg de mélange, 2,94 moles d'ammoniac, 1,11 moles de diméthylamine, 46,1 moles d'eau et 1,5 moles de chlorure de sodium.

L'élement (A), qui est constitué d'un évaporateur à film, est réglé pour réaliser un taux d'évaporation de 15%.

Les points d'introduction dans la colonne à distiller (B) sont tels qu'il y ait:

— un plateau équivalent entre le bouilleur de la colonne et le point d'introduction 1;

— dix plateaux équivalents entre le point d'introduction 1 et le point d'introduction 2;

— dix plateaux équivalents entre le point d'introduction 2 et la tête de la colonne.

Le taux de reflux étant de 25, cet appareil permet de récupérer 96% de la diméthylamine en pied de colonne sans précipitation gênante de sel dans la colonne.

### Exemple 2

On veut séparer un mélange contenant, pour 1 kg de mélange, 5,8 moles d'ammoniac, 2,22 moles de diméthylamine, 0,5 mole de diméthylhydrazine asymétrique, 36,1 moles d'eau et 2,05 moles de chlorure de sodium.

L'évaporateur (A) est réglé de façon à réaliser un taux d'évaporation de 25%.

Les points d'introduction dans la colonne à distiller (B) sont tels qu'il y ait:

— trois plateaux équivalents entre le bouilleur de la colonne et le point d'introduction 1;

— dix plateaux équivalents entre le point d'introduction 1 et le point d'introduction 2;

— dix plateaux équivalents entre le point d'introduction 2 et la tête de colonne.

Le taux de reflux étant 50, cet appareil permet de récupérer 98% de l'ammoniac et de la diméthylamine en tête, et 97% de la diméthylhydrazine en pied de colonne sans précipitation gênante de chlorure de sodium dans la colonne.

## Revendications

1. Procédé permettant de séparer par distillation, à partir d'un mélange contenant de l'ammoniac, de la diméthylamine, de l'eau et du chlorure de sodium, ledit ammoniac d'avec la diméthylamine sans provoquer la précipitation dudit chlorure de sodium, caractérisé en ce que

— dans un évaporateur (A), équivalent à une colonne ayant moins de cinq plateaux théoriques, on provoque l'évaporation de la quasi-totalité de l'ammoniac contenu dans le mélange de départ et d'une partie de la méthylamine contenus dans ledit mélange;

— on alimente une colonne à distiller (B) avec, d'une part, en partie haute de ladite colonne (point 2), les vapeurs produites dans l'évaporateur et avec, d'autre part, en partie basse de ladite colonne (point 1), le liquide provenant de l'évaporateur;

— et on recueille en tête de ladite colonne l'ammoniac contenu dans le mélange de départ.

2. Procédé permettant de séparer, par distillation, à partir d'un mélange contenant de l'ammoniac, de la diméthylamine, de la diméthylhydrazine asymétrique, de l'eau et du chlorure de sodium, d'une part, les composés volatils que sont l'ammoniac et la diméthylamine d'avec les autres constituants du mélange sans provoquer la précipitation dudit chlorure de sodium, caractérisé en ce que

— dans un évaporateur (A), équivalent à une colonne ayant moins de cinq plateaux théoriques, on provoque l'évaporation de la quasi-totalité de l'ammoniac et de la diméthylamine contenues dans le mélange de départ et d'une partie de la diméthylhydrazine asymétrique contenue dans ledit mélange;

— on alimente une colonne à distiller (B) avec, d'une part, en partie haute de ladite colonne (point 2), les vapeurs provenant de l'évaporateur et avec, d'autre part, en partie basse de ladite colonne (point 1), le liquide provenant de l'évaporateur;

— et on recueille en tête de ladite colonne l'ammoniac et la diméthylamine contenus dans le mélange de départ.

## Claims

1. Method for separating, by distillation, from a mixture containing ammonia, dimethylamine, water and sodium chloride, the said ammonia from the said dimethylamine, without causing the sodium chloride to precipitate, characterised in that:

— in an evaporator (A), equivalent to a fractionating column with less than five theoretical plates, virtually all the ammonia and part of the methylamine contained in the starting mixture are caused to evaporate;

— a distillation column (B) is fed, on the one hand at the top part of the column (point 2), with the vapours produced inside the evaporator, and on the other hand, at the base of the column (point 1), with the liquid coming from the evaporator;

— and the ammonia contained in the starting mixture is collected at the top of said column.

2. Method for separating, by distillation, from a mixture containing ammonia, dimethylamine, asymmetrical dimethylhydrazine, water and sodium chloride, on the one hand, the volatile compounds such as ammonia and dimethylamine from the other constituents of the mixture without causing said sodium chloride to precipitate, characterised in that:

— in an evaporator equivalent to a fractionating column with less than five theoretical plates, virtually all the ammonia and dimethylamine and part of the asymmetrical dimethylhydrazine contained in the starting mixture are caused to evaporate;

— a distillation column (B) is fed with, on the one hand, at the top part of the column (point 2), vapours from the evaporator, and on the other hand, at the base of the column (point 1) with the liquid coming from the evaporator;

— and the ammonia and dimethylamine contained in the starting mixture are collected at the top of said column.

**Patentansprüche**

1. Verfahren zur Abtrennung von Ammoniak und Dimethylamin durch Destillation aus einer Mischung enthaltend Ammoniak, Dimethylamin, Wasser und Natriumchlorid, ohne ein Ausfällen des Natriumchlorids zu bewirken, dadurch gekennzeichnet, dass

— in einem Verdampfer (A), der einer Kolonne mit weniger als fünf theoretischen Böden entspricht, die Verdampfung im wesentlichen der gesamten Menge an in der Ausgangsmischung enthaltenem Ammoniak und eines Teiles des in der Mischung enthaltenen Methylamins (sic) bewirkt wird;

— eine Destillationskolonne (B) einerseits in ihrem oberen Teil (Punkt 2) mit den im Verdampfer erzeugten Dämpfen und anderseits in ihrem unteren Teil (Punkt 1) mit der aus dem Verdampfer kommenden Flüssigkeit gespeist wird;

— und das in der Ausgangsmischung enthaltene Ammoniak am Kopf der Kolonne gesammelt wird.

2. Verfahren zur Abtrennung der flüchtigen Verbindungen, wie Ammoniak und Dimethylamin, einerseits und der anderen Bestandteile aus einer Mischung enthaltend Ammoniak, Dimethylamin, asymmetrisches Dimethylhydrazin, Wasser und Natriumchlorid durch Destillation, ohne ein Ausfällen des Natriumchlorids zu bewirken, dadurch gekennzeichnet, dass

— in einem Verdampfer (A), der einer Kolonne mit weniger als fünf theoretischen Böden entspricht, die Verdampfung im wesentlichen der gesamten Menge an in der Ausgangsmischung enthaltenem Ammoniak und Dimethylamin und eines Teiles des in der Mischung enthaltenen asymmetrischen Dimethylhydrazins bewirkt wird;

— eine Destillationskolonne (B) einerseits in ihrem oberen Teil (Punkt 2) mit den aus dem Verdampfer kommenden Dämpfen und anderseits in ihrem unteren Teil (Punkt 1) mit der aus dem Verdampfer kommenden Flüssigkeit gespeist wird;

— und das in der Ausgangsmischung enthaltene Ammoniak und Dimethylamin am Kopf der Kolonne gesammelt wird.